# EUROPEAN PATENT APPLICATION

(11) **EP 4 759 421 A1**
(43) Date of publication of application: **17.06.2026**
(21) Application number: 25172763.2
(22) Date of filing: 25.04.2025
(51) Int. Cl.: B02C 19/00, B02C 21/00, B02C 23/02, B02C 25/00, C22B 7/00, B01F 33/80

(54) **LITHIUM BATTERY CERAMIC SEPARATOR POWDER PREPARATION METHOD AND APPARATUS THEREOF**

(30) Priority: 16.12.2024 CN 202411845960
(71) Applicant: Guangdong Sophon Intelligent Technology Co., Ltd, Dongguan City Guangdong (CN); Sophon Technology (Hungary) Co. Kft., 1054 Budapest (HU)
(72) Inventor: DUAN, Zhen, Dongguan (CN); ZHENG, Chunyang, Dongguan (CN); LIANG, Dechao, Dongguan (CN); LI, Linbo, Dongguan (CN)
(74) Representative: JD&P Patent Attorneys Joanna Dargiewicz & Partners

(57) **Abstract**

The disclosure provides a dispersion-blending based particle size-improved lithium battery ceramic separator powder preparation method and an apparatus thereof. The aforementioned dispersion-blending based particle size-improved lithium battery ceramic separator powder preparation method includes transporting a first raw material to a sand mill assembly to obtain a first powder; performing a complex grinding inspection operation on the first powder. The complex grinding inspection operation includes: inspecting the first powder to obtain a first particle size parameter; determining whether the first particle size parameter is greater than a preset particle size parameter; transporting the first powder to a powder buffer tank to form a second powder, if the first particle size parameter is greater than the preset particle size parameter, and dispersing and mixing a second raw material and the second powder according to a dynamic blending ratio to have the second powder enter the sand mill assembly together with the second raw material for grinding, so that the raw material of the previous process can be ground timely, and the material obtained through grinding the raw material can enter the equipment of the next process, thereby reducing the impact of repeated grinding of powder on the rhythm and efficiency of the production line.

## Description

### TECHNICAL FIELD

The invention relates to the technical field of lithium battery separator preparation, and more particularly to a dispersion-blending based particle size-improved lithium battery ceramic separator powder preparation method and apparatus thereof.

### BACKGROUND OF THE ART

With the rapid development of the lithium battery industry, the demand for lithium battery separators in the industry has gradually increased. Lithium battery separators are made by coating a slurry on a substrate, and the slurry is mainly prepared by mixing powder and a binder, in which the particle size of the powder will directly affect the coating effect of the slurry. Generally, the particle size of lithium battery separator powder needs to be controlled below 20µm. However, as ceramic materials have stable structure and hard texture, when they are ground to produce lithium battery ceramic separator powder, the particle size of some or batches of powder in the lithium battery ceramic separator powder will still be greater than 20µm. At this time, in order to reduce equipment replacement or increased costs, most factories usually use the original equipment to repeat grinding of the lithium battery ceramic separator powder, and this will cause the raw materials of the previous process not to be ground timely, thereby making the equipment of the next process stop operating due to lacking of material to be processed, affecting the rhythm and efficiency of the entire production line.

### SUMMARY OF THE INVENTION

An objective of the disclosure is to overcome the shortcomings of the prior art and provide a dispersion-blending based particle size-improved lithium battery ceramic separator powder preparation method and an apparatus thereof, which stabilize the rhythm and efficiency of a lithium battery ceramic separator powder grinding production line.

An objective of the disclosure is to overcome the deficiencies of the prior art by providing a dispersion-blending based particle size-improved lithium battery ceramic separator powder preparation method and an apparatus thereof, which help stabilize the rhythm and efficiency of a lithium battery ceramic separator powder grinding production line.

The objective of the disclosure is achieved with the following technical solution:
A dispersion-blending based particle size-improved lithium battery ceramic separator powder preparation method comprises:
transporting a first raw material to a sand mill assembly to obtain a first powder; and
performing a complex grinding inspection operation on the first powder;
wherein the complex grinding inspection operation comprises:
inspecting the first powder to obtain a first particle size parameter;
determining whether the first particle size parameter is greater than a preset particle size parameter;
transporting the first powder to a powder buffer tank to form a second powder, if the first particle size parameter is greater than the preset particle size parameter;
dispersing and mixing a second raw material and the second powder according to a dynamic blending ratio to obtain a mixed material; and
transporting the mixed material to the sand mill assembly to perform grinding on the mixed material;
wherein the dynamic blending ratio is obtained by the following steps:
   acquiring a feeding rate of the second raw material;
   acquiring a discharge rate of the second powder;
   performing powder speed ratio processing on the feeding rate and the discharge rate to obtain a mixing flow rate ratio;
   inspecting whether the mixing flow rate ratio is less than or equal to a preset mixing flow rate ratio; and
   increasing the feeding rate of the second raw material and decreasing the discharge rate of the second powder when the mixing flow rate ratio is less than or equal to the preset mixing flow rate ratio.

Compared with the prior art, the disclosure has at least the following advantages:
In the aforementioned dispersion-blending based particle size-improved lithium battery ceramic separator powder preparation method, by transporting the first raw material to the sand mill assembly, the sand mill assembly can grind the first raw material into the first powder, and the particle size of the first powder can be acquired after the first powder is inspected, so as to obtain the first particle size parameter, and the first particle size parameter can reflect the particle size of the first powder, namely indicating the grinding effect of the sand mill assembly, and then, by determining whether the first particle size parameter is greater than the preset particle size parameter, whether the particle size of the first powder meets the standard can be reflected, and if the first particle size parameter is greater than the preset particle size parameter, it is determined that the particle size of the first powder deviates from the standard, and at this time, the first powder is transported to the powder buffer tank to form the second powder, and the second raw material and the second powder are dispersedly blended according to the dynamic blending ratio, so that the second powder can enter the sand mill assembly together with the second raw material for grinding, so that the raw material of the previous process can be ground timely, and the material obtained through grinding the raw material can enter the equipment of the next process, thereby reducing the impact of repeated grinding of powder on the rhythm and efficiency of the production line. Further, according to this method, raw materials of different batches and qualities can be ground through the same sand mill assembly, so that there is no need to replace or install new grinding equipment, and the investment in production costs is reduced.

### BRIEF DESCRIPTION OF THE DRAWINGS

In order to more clearly illustrate the technical solutions of the embodiments of the disclosure, the drawings that are used necessarily in the embodiments will be briefly introduced below. It should be understood that the following drawings only show certain embodiments of the disclosure and therefore should not be regarded as limiting the scope. For those having ordinary skill in the field, other related drawings can be obtained based on these drawings without creative endeavor.
FIG. 1 is a flow chart showing a dispersion-blending based particle size-improved lithium battery ceramic separator powder preparation method according to an embodiment of the disclosure;
FIG. 2a illustrates a flow chart showing a complex grinding inspection operation of the dispersion-blending based particle size-improved lithium battery ceramic separator powder preparation method depicted in FIG. 1;
FIG. 2b illustrates a flow chart of inspecting the first powder to obtain a first particle size parameter;
FIG. 2c illustrates a flow chart of discharging the first powder if the first particle size parameter is less than or equal to the preset particle size parameter;
FIG. 2d illustrates a flow chart before discharging the target powder to the equipment of the next process;
FIG. 3 is a schematic view showing a powder preparation apparatus according to another embodiment; and
FIG. 4 illustrates a powder inspection tank according to an alternative embodiment.

### DETAILED DESCRIPTION OF PREFERRED EMBODIMENTS

For better understanding of the technical solutions and beneficial effects of the disclosure, the disclosure will be further described in detail below with reference to embodiments thereof.

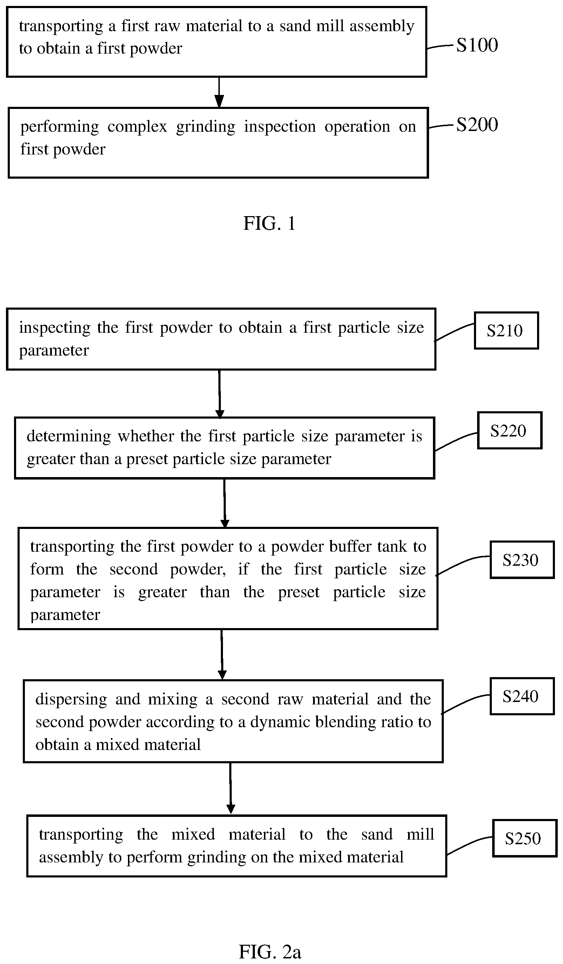

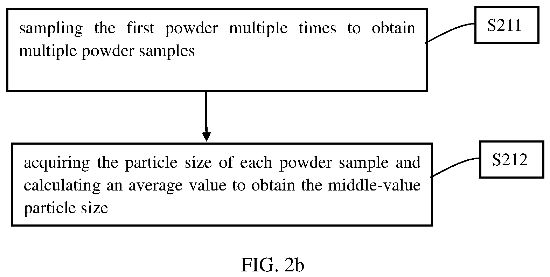

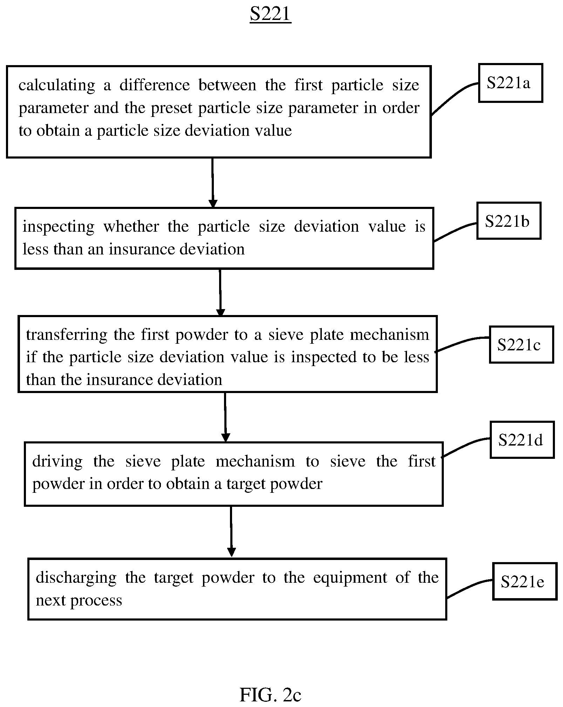

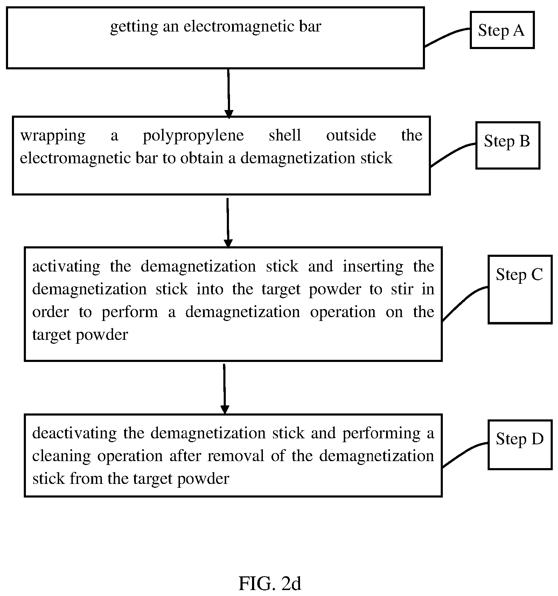

As shown in FIGS. 1 and 2, a dispersion-blending based particle size-improved lithium battery ceramic separator powder preparation method according to an embodiment comprises some or all of the following steps.

S100, transporting a first raw material to a sand mill assembly to obtain a first powder. In the instant embodiment, the first raw material is a ceramic material, and the first raw material, after being ground by the sand mill assembly, is presented as the first powder in a granular form, and the particle size of the first powder better meet the particle size requirement for separator preparation. Specifically, the sand mill assembly may be a ball mill, which is of course not limited herein, and the technicians of the field can make other choices according to needs.

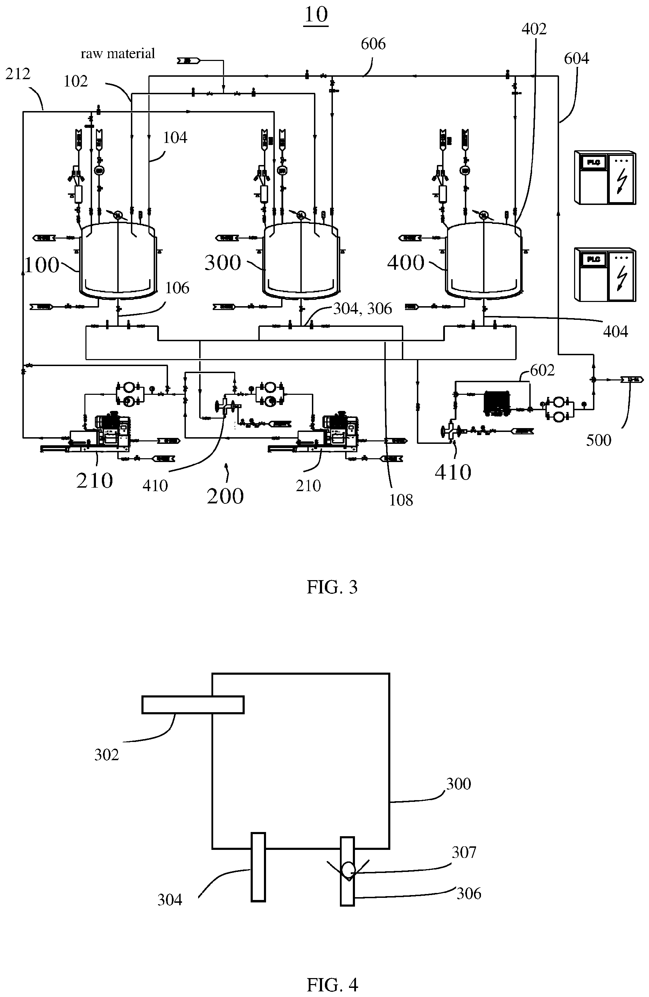

S200, performing a complex grinding inspection operation on the first powder. In the instant embodiment, the particle size of the first powder can be acquired by performing the complex grinding inspection operation on the first powder, and a grinding effect of the sand mill assembly can be reflected according to the particle size of the first powder, namely indicating whether the particle size of the first powder obtained after the first powder is ground by the sand mill assembly meets the particle size requirement for separator preparation, in order to determine whether re-grinding of the first powder is necessary, wherein by performing the complex grinding inspection operation on the first powder, the first powder that meets the requirement for separator preparation is directly discharged out via the pipeline 602 and the discharging port 500 (FIG. 3), and the first powder that do not meet the requirement for separator preparation is transported to a powder buffer tank to form the second powder, and the sand mill assembly performs re-grinding on the second powder, that is, the complex grinding inspection operation includes at least two different operation processes.

Referring to FIG. 2a, the complex grinding inspection operation comprises:
S210, inspecting the first powder to obtain a first particle size parameter. **In** the instant embodiment, a portion of the first powder is selected by means of random sampling. Since the portion of the first powder is selected randomly, by means of inspecting the particle size of the portion of the first powder, the particle size of the entirety of the first powder can be reflected by the particle size of the portion of the first powder, namely obtaining the first particle size parameter. Specifically, the particle size of the portion of the first powder is obtained by taking an average value of a maximum power particle size and a minimum power particle size of the portion of the first powder, so as to reduce a processing procedure of each powder particle size data of the portion of the first powder, allowing a large amount and complicated powder particle size data to be converted into a simple first particle size parameter to thereby improve the inspection efficiency.

S220, determining whether the first particle size parameter is greater than a preset particle size parameter. In the instant embodiment, the preset particle size parameter is a particle size parameter that meets the requirement for preparation. The preset particle size parameter is set based on industry experience. By comparing values of the first particle size parameter and the preset particle size parameter, a condition of deviation between the first particle size parameter and the preset particle size parameter can be reflected, that is, indicating whether the first particle size parameter meets the particle size requirement for separator preparation.

S230, transporting the first powder to a powder buffer tank to form the second powder, if the first particle size parameter is greater than the preset particle size parameter. In the instant embodiment, the first particle size parameter being greater than the preset particle size parameter indicates the particle size of the first powder is greater than the particle size required for separator preparation, namely indicating the first powder does not meet the requirement for separator preparation. By transporting the first powder to the powder buffer tank, the portion of the first powder that does not meet the requirement for separator preparation is separated from the portion that meets the requirements, and the portion of the first powder that does not meet the requirement for separator preparation being transported to the powder buffer tank to form the second powder also indicates re-grinding of the second powder is required.

S240, dispersing and mixing a second raw material and the second powder according to a dynamic blending ratio to obtain a mixed material. **In** the instant embodiment, the second raw material is an unground raw material, that is, a newly added raw material, and the second raw material and the first raw material are the same raw material from different batches, so that the second raw material and the second powder are dispersedly blended according to the dynamic blending ratio to obtain the mixed material which contains the second raw material that is exported from the previous process and also contains the second powder, that is, the second raw material of the previous process and the second powder are transported synchronously so as to ensure that the second raw material of the previous process can be ground timely, thereby improving the preparation efficiency.

S250, transporting the mixed material to the sand mill assembly to perform grinding on the mixed material. In the instant embodiment, by transporting the mixed material to the sand mill assembly, namely the second powder and the second raw material of the previous process being synchronously transported to the sand mill assembly, the sand mill assembly performs grinding on the second powder while performing initial grinding on the second raw material, so that the second raw material can timely enter the sand mill assembly for performing grinding thereon. Further, after the second powder is ground by the sand mill assembly, the particle size of the second powder is closer to the particle size requirement required for separator preparation, and as such, the equipment of the next process can keep operating, so as to effectively reduce the impact of repeated grinding of powder on the rhythm and efficiency of the production line.

It is appreciated that by transporting the first raw material to the sand mill assembly, the sand mill assembly can grind the first raw material into the first powder, and the particle size of the first powder can be acquired after the first powder is inspected, so as to obtain the first particle size parameter, and the first particle size parameter can reflect the particle size of the first powder, namely indicating the grinding effect of the sand mill assembly, and then, by determining whether the first particle size parameter is greater than the preset particle size parameter, whether the particle size of the first powder meets the standard can be reflected, and if the first particle size parameter is greater than the preset particle size parameter, it is determined that the particle size of the first powder deviates from the standard, and at this time, the first powder is transported to the powder buffer tank to form the second powder, and the second raw material and the second powder are dispersedly blended according to the dynamic blending ratio, so that the second powder can enter the sand mill assembly together with the second raw material for grinding, so that the raw material of the previous process can be ground timely, and the material obtained through grinding the raw material can enter the equipment of the next process, thereby reducing the impact of repeated grinding of powder on the rhythm and efficiency of the production line. Further, according to this method, raw materials of different batches and qualities can be ground through the same sand mill assembly, so that there is no need to replace or install new grinding equipment, and the investment in production costs is reduced.

Jointly referring to the illustration of FIG. 3, generally, in an actual production process, the dynamic blending ratio is primarily adjusted based on factors, such as factory quality of powder and production efficiency. For example, when the factory quality of powder is improved, the average particle size of the mixed material after grinding will be smaller, and the proportion of the second powder in the mixed material being excessively high may easily lead to a longer time of grinding for per unit volume of the mixed material, resulting in decrease of production efficiency, elongation of production cycle, and ultimately adding an extra production cost to impose a heavy burden on the industry.

In order to take into account the production efficiency, in one embodiment, a first flow meter is arranged on a feed pipe 102 of a dispersion tank 100, and the first flow meter is used to measure the flow rate of the second raw material in the feed pipe 102 of the dispersion tank 100; a second flow meter is arranged on the connection pipeline 104 between the powder buffer tank 400 and the dispersion tank 100, and the second flow meter is used to measure the flow rate of the second powder in the connection pipeline 104 between the powder buffer tank 400 and the dispersion tank 100.

The dynamic blending ratio is obtained by some or all of the following steps:
Acquiring a feeding rate of the second raw material. In the instant embodiment, the feeding rate of the second raw material is acquired by using the first flow meter to measure the flow rate of the second raw material in the feed pipe 102 of the dispersion tank 100, so as to obtain the speed at which the second raw material enters the dispersion tank 100 and also to reflect the volume of the second raw material entering the dispersion tank 100 within a certain period of time.

Acquiring a discharge rate of the second powder. In the instant embodiment, the discharge rate of the second powder is acquired by using the second flow meter to measure the flow rate of the second powder entering the dispersion tank 100 through a return connection pipeline 104, so as to obtain the speed at which the second powder enters the dispersion tank 100 and also to reflect the volume of the second powder entering the dispersion tank 100 within a certain period of time.

Performing powder speed ratio processing on the feeding rate V_{feeding} and the discharge rate V_{discharge} to obtain a mixing flow rate ratio. In the instant embodiment, the mixing flow rate ratio (V_{feeding}/V_{discharge}) is obtained by performing powder speed ratio processing on the feeding rate and the discharge rate, namely by way of calculating the ratio of the feeding rate to the discharge rate, and the mixing flow rate ratio reflects the ratio of the second raw material entering the dispersion tank 100 to the second powder entering the dispersion tank 100.

Inspecting whether the mixing flow rate ratio is less than or equal to a preset mixing flow rate ratio. The preset mixing flow rate ratio is the ratio of the feeding rate to the discharge rate when the factory quality of powder and production efficiency both meet the standards. By comparing the mixing flow rate ratio and the preset mixing flow rate ratio, it is possible to reflect a difference of the current ratio of the second raw material entering the dispersion tank 100 and the second powder entering the dispersion tank 100 from that when the factory quality of powder and production efficiency both meet the standards. In one embodiment, the preset mixing flow rate ratio is 9, and this is of course not a limitation here.

Increasing the feeding rate and decreasing the discharge rate when the mixing flow rate ratio is less than or equal to the preset mixing flow rate ratio. In the instant embodiment, the mixing flow rate ratio being less than or equal to the preset mixing flow rate ratio indicates the current proportion of the second raw material in the dispersion tank 100 is less than or equal to the proportion of the second raw material when the factory quality of powder and production efficiency both meet the standards, indicating that the proportion of the second powder is excessively high in the mixed material, that is, the mixed material needs to be ground for a longer time after being ground by the sand mill assembly 200. Increasing the feeding rate and decreasing the discharge rate allows an increase of the second raw material entering the dispersion tank 100 and a decrease of the second powder entering the dispersion tank 100 at the same time, so as to rapidly reduce the proportion of the second powder in the mixed material formed through dispersing and mixing the second raw material and the second powder, reducing the time required for grinding per unit volume of the mixed material, and improving the factory quality of powder while increasing the production efficiency.

It can be appreciated that by acquiring the feeding rate of the second raw material and the discharge rate of the second powder, the volume of the second raw material and the volume of the second powder entering the dispersion tank 100 in the same time period can also be obtained to thereby obtain the proportion of the second powder in the mixed material. The mixing flow rate ratio being less than or equal to the preset mixing flow rate ratio indicates that the proportion of the second powder in the mixed material in the dispersion tank 100 is higher than the proportion of the second powder when the factory quality of powder and the production efficiency both meet the standards. By increasing the feeding rate and decreasing the discharge rate, the second raw material entering the dispersion tank 100 is increased, while the second powder entering the dispersion tank 100 is decreased in the same time to thereby rapidly reduce the proportion of the second powder in the mixed material formed through dispersing and mixing the second raw material and the second powder, reducing the time required for grinding per unit volume of the mixed material, and improving the factory quality of powder while increasing the production efficiency.

In one of the embodiments, when the mixing flow rate ratio is greater than the preset mixing flow rate ratio, the feeding rate is decreased and the discharge rate is increased. In the instant embodiment, the mixing flow rate ratio being greater than the preset mixing flow rate ratio indicates that in the dispersion tank 100, the current proportion of the second raw material is greater than the proportion of the second raw material when the factory quality of powder and the production efficiency both meet the standards. At this time, the consumption of the second powder is relatively small, and the second powder is easy to accumulate in the powder buffer tank 400. By decreasing the feeding rate and increasing the discharge rate, it is possible to decrease the second raw material entering the dispersion tank 100 while increase the second powder entering the dispersion tank 100 at the same time, so as to rapidly increase the proportion of the second powder in the mixed material formed through dispersing and mixing the second raw material and the second powder, thereby increasing the consumption of the second powder to reduce powder accumulation in the powder buffer tank 400.

Referring to FIG. 3, generally, when the second powder appears cumulatively, it means powders larger than the preset particle size parameter appear too many times, that is the volume of the first powder entering the powder buffer tank 400 is larger than the volume of the second powder discharging from the powder buffer tank 400, consequently leading to a sudden increase of powder inside the powder buffer tank 400, and situation of overloading of the powder buffer tank 400 is prone to occur.

In order to reduce the situation of overloading of the powder buffer tank 400, in one of the embodiments, a one-way valve 307 (shown in FIG. 4) is further arranged at a return port 306 of the powder inspection tank 300, and a measurement meter is provided on the one-way valve 307. The measurement meter is used to count the cumulative time and cumulative number of times the one-way valve is opened. When the first powder passes through the return port 306, the one-way valve opens, and when no first powder passes through the return port, the one-way valve closes.

Subsequent to transporting the first powder to the powder buffer tank 400 to form the second powder, the following is further included:
Obtaining a powder passage duration according to cumulative time of the one-way valve opening. In the instant embodiment, the cumulative time of the one-way valve opening is counted by the measurement meter, and since the first powder passes through the return port to enter the powder buffer tank 400 when the one-way valve opens, accumulated time of the first powder passing through the one-way valve to enter the powder buffer tank 400 can be obtained, which is the powder passage duration. The powder passage duration reflects the volume of the first powder entering the powder buffer tank 400, that is, the volume of the first powder that enters the powder buffer tank 400 to form the second powder.

Inspecting whether the powder passage duration is greater than or equal to a preset passage duration. In the instant embodiment, the preset passage duration is the time when the powder buffer tank 400 is just overloaded and is set according to industry experience. By comparing the powder passage duration with the preset passage duration, it is possible to reflect a different of the volume of the first powder entering the powder buffer tank 400 from the volume of powder in the powder buffer tank 400 when overloaded, namely reflecting a difference of the volume of the second powder cumulatively formed in the powder buffer tank 400 from the volume of powder in the powder buffer tank 400 when overloaded.

Increasing the feeding rate and the discharge rate simultaneously, if the powder passage duration is greater than or equal to the preset passage duration. **In** the instant embodiment, the powder passage duration being greater than or equal to the preset passage duration indicates the volume of the first powder entering the powder buffer tank 400 is greater than or equal to the volume of powder in the powder buffer tank 400 when overloaded, indicating the volume of the first powder entering the powder buffer tank 400 is excessively large, and also indicating the volume of the second powder formed in the powder buffer tank 400 is excessively large. By increasing the discharge rate, it is possible to increase discharge of the second powder in the powder buffer tank 400 to the dispersion tank 100, thereby rapidly decreasing the second powder in the powder buffer tank 400 to avoid occurrence of the situation of sudden increase of powder and overloading in the powder buffer tank 400. The feeding rate is simultaneously increased to synchronously increase the second raw material entering the dispersion tank 100, so as to reduce the impact on the mixing flow rate ratio, namely reducing the impact on the factory quality of powder.

In one of the embodiments, a material introduction diaphragm pump 410 is also provided on the connection pipeline between the powder buffer tank 400 and the dispersion tank 100. The return port 306 of the powder inspection tank 300 is connected to the powder buffer tank 400 through the material introduction diaphragm pump 410, pipelines 602, 604. The power of the material introduction diaphragm pump 410 in driving the first powder into the powder buffer tank 400 is different from the power of the material introduction diaphragm pump 410 in driving the second powder into the dispersion tank 100.

Subsequent to inspecting whether the powder passage duration is greater than or equal to the preset passage duration, the following is further included:
Obtaining opening-counting cumulative number of times according to a cumulative number of times the one-way valve opens if the powder passage duration is inspected to be less than the preset passage duration. In the instant embodiment, the powder passage duration is less than the preset passage duration, and the cumulative number of times the one-way valve opens is counted by the measurement meter. Since the first powder passes through the return port to enter the powder buffer tank 400 when the one-way valve opens, the cumulative number of times the first powder passes through the one-way valve to enter the powder buffer tank 400 can be obtained, which is the opening-counting cumulative number of times. The opening-counting cumulative number of times reflects the volume of the first powder entering the powder buffer tank 400, that is, the volume of the first powder that enters the powder buffer tank 400 to form the second powder.

Inspecting whether the opening-counting cumulative number of times is greater than or equal to a preset cumulative number of times. It is appreciated that in the instant embodiment, the preset cumulative number of times is the number of times the powder buffer tank 400 is just overloaded, and is set according to industry experience. By comparing the opening-counting cumulative number of times with the preset cumulative number of times, it is possible to reflect a difference of the volume of the first powder entering the powder buffer tank 400 from the volume of powder in the powder buffer tank 400 when overloaded, namely reflecting a difference of the volume of the second powder cumulatively formed in the powder buffer tank 400 from the volume of powder in the powder buffer tank 400 when overloaded.

Balancing operation power of the material introduction diaphragm pump 410 if the opening-counting cumulative number of times is greater than or equal to the preset cumulative number of times. In the instant embodiment, the opening-counting cumulative number of times being greater than or equal to the preset cumulative number of times indicates the volume of the first powder entering the powder buffer tank 400 is greater than or equal to the volume of powder in the powder buffer tank 400 when overloaded, indicating the volume of the first powder entering the powder buffer tank 400 is excessively large, and also indicating the volume of the second powder formed in the powder buffer tank 400 is excessively large. By balancing the operation power of the material introduction diaphragm pump 410, it is possible to make the power of the material introduction diaphragm pump 410 for driving the first powder into the powder buffer tank 400 consistent with the power of the material introduction diaphragm pump 410 for driving the second powder out of the powder buffer tank 400, namely the rate at which the first powder enters the powder buffer tank 400 is consistent with the rate at which the second powder entering the dispersion tank 100, that is, the second powder formed by the first powder entering the powder buffer tank 400 is consistent with the second powder discharged from the powder buffer tank 400 during the same time period, so that the total amount of powder in the powder buffer tank 400 remains unchanged, and ultimately, occurrence of situation of sudden increase of powder in the powder buffer tank 400 and overloading can be avoided.

In one of the embodiments, if the opening-counting cumulative number of times is less than the preset cumulative number of times, the operation power of the material introduction diaphragm pump 410 is kept unchanged. In the instant embodiment, the opening-counting cumulative number of times being less than the preset cumulative number of times indicates that the volume of the first powder entering the powder buffer tank 400 is less than the volume of powder in the powder buffer tank 400 when overloaded, indicating that the volume of the first powder entering the powder buffer tank 400 is relatively small, indicating that there will be no sudden increase occurring in the buffer tank, making the material introduction diaphragm pump 410 keeping the original operation power without change.

In one embodiment, subsequent to S250, transporting the mixed material to the sand mill assembly to perform grinding on the mixed material, the following is further included:
S260, driving the sand mill assembly to grind the mixed material to obtain a third powder. In the instant embodiment, by driving the sand mill assembly, a grinding assembly is cause to perform grinding on the mixed material, namely simultaneously grinding the second raw material and the second powder in the mixed material, to thereby obtain the third powder. **In** this, after the second powder is ground by the grinding assembly, the particle size of the second powder becomes smaller, and the particle size of the second raw material, after being ground by the grinding assembly, also becomes smaller, so as to get closer to the particle size requirement required for separator preparation.

S270, returning the third powder as new first powder back to the complex grinding inspection operation step. In the instant embodiment, returning the third powder as new first powder back to the complex grinding inspection operation step is to perform the complex grinding inspection operation on the third powder in order to acquire the particle size of the third powder, and the grinding effect of the sand mill assembly can be reflected according to the particle size of the third powder, namely indicating whether the particle size of the third powder obtained after the third powder is ground by the sand mill assembly meets the particle size requirement for separator preparation, in order to determine whether re-grinding of the third powder is necessary, to further ensure that the particle size of powder can meet the particle size requirement for separator preparation, and ultimately ensure the quality of the produced lithium battery separator.

It is appreciated that the third powder is obtained grinding the mixed material with the sand mill assembly, and the third powder is returned as new first powder back to the complex grinding inspection operation step, so as to perform inspection on the third powder to determine whether the particle size of the third powder meets the particle size requirement for separator preparation, to thereby confirm whether the third powder reaches the particle size requirement required for separator preparation to finally ensure the quality of the produced lithium battery separator.

In one of the embodiments, subsequent to S220, determining whether the first particle size parameter is greater than a preset particle size parameter, the following is included:
S221, discharging the first powder if the first particle size parameter is less than or equal to the preset particle size parameter. In the instant embodiment, the first particle size parameter being less than or equal to the preset particle size parameter indicates that the particle size of the first powder is less than or equal to the particle size required for separator preparation, namely indicating that the first powder has reached the requirement for separator preparation, and also indicating there is no need to perform re-grinding on the first powder. In this way, discharging the first powder after the first particle size parameter is less than or equal to the preset particle size parameter allows the first powder to timely enter the equipment of the next process, thereby reducing the situation where the equipment of the next process stops operating due to no material to be processed, and stabilizing the rhythm and efficiency of the entire production line.

In one of the embodiments, the first particle size parameter is a middle-value particle size. In the instant embodiment, by selecting the first particle size parameter as the middle-value particle size, since the middle-value particle size is an average particle size of the first powder, it is possible to reflect the situation of powder particle size in the first powder with the middle-value particle size.

Referring to FIG. 2b, S210, inspecting the first powder to obtain a first particle size parameter comprises:
S211, sampling the first powder multiple times to obtain multiple powder samples. In the instant embodiment, by sampling the first powder multiple times, the number of powder samples can be increased, thereby avoiding experimental errors caused by tool small a number of powder samples.

S212, acquiring the particle size of each powder sample and calculating an average value to obtain the middle-value particle size. In the instant embodiment, by acquiring the particle size of each powder sample, multiple particle size data are obtained, and each particle size data reflects the particle size of the corresponding powder sample. By calculating the average value of the multiple particle size data, the middle-value particle size is obtained, so that the middle-value particle size may reflect the average particle size of the powder samples. Further, since the powder samples are obtained from the first powder, the middle-value particle size can more accurately reflect the average particle size of the first powder, so as to reduce inspection errors. Specifically, the particle size of each powder sample is obtained by calculating an average value of the maximum power particle size and the minimum power particle size of the corresponding powder sample, so that the processing procedure of each powder particle size data in the corresponding powder sample can be reduced to enhance the inspection efficiency.

Generally, the middle-value particle size is obtained by taking the average value of the particle size of each powder sample, that is, at least half of the powders in the first powder have a particle size larger than the middle-value particle size. When the first particle size parameter is less than or equal to the preset particle size parameter, the middle-value particle size is less than or equal to the preset particle size parameter. The closer the middle-value particle size is to the preset particle size parameter, the more particles in the first powder have a particle size larger than the preset particle size parameter, and if the first powder is directly put into production, the consistency of the quality of the produced lithium battery separator will decrease.

Referring to FIG. 2c in order to solve the above problem, in one of the embodiments, S221, discharging the first powder if the first particle size parameter is less than or equal to the preset particle size parameter specifically comprises:
S221a, calculating a difference between the first particle size parameter and the preset particle size parameter, if the first particle size parameter is less than or equal to the preset particle size parameter, in order to obtain a particle size deviation value;
S221b, inspecting whether the particle size deviation value is less than an insurance deviation;
S221c, transferring the first powder to a sieve plate mechanism if the particle size deviation value is inspected to be less than the insurance deviation;
S221d, driving the sieve plate mechanism to sieve the first powder in order to obtain a target powder;
S221e, discharging the target powder to the equipment of the next process.

In the instant embodiment, by calculating the difference between the first particle size parameter and the preset particle size parameter, the difference that the first particle size parameter is distant from the preset particle size parameter can be reflected. The insurance deviation is the difference between the middle-value particle size of the first powder and the preset particle size parameter when the particle size of 90% of the powder in the first powder is less than a preset particle size. By comparing the particle size deviation value with the insurance deviation, the amount of particle in the first powder having a powder particle size larger than the preset particle size parameter can be reflected. The particle size deviation value being inspected to be less than the insurance deviation indicates that the particle size of less than 90% of the powder in the first powder is greater than the preset particle size parameter, indicating that the particle size of more than 10% of the powder in the first powder is greater than the preset particle size parameter. By transferring the first powder to the sieve plate mechanism, the powder with a particle size less than the preset particle size parameter in the first powder can be sieved out by the sieve plate mechanism to obtain the target powder. And, finally, the target powder is discharged to the equipment of the next process to produce lithium battery separator. In this way, the particle size of at least 90% of the powder in the target powder is kept smaller than the preset particle size parameter, that is, at least 90% of the powder in the target powder meets the particle size requirement for separator preparation, so that the consistency of quality of the produced lithium battery separator is better.

In one of the embodiments, discharging the first powder to the equipment of the next process if the particle size deviation value inspected to be greater than or equal to the insurance deviation. It is appreciated that the particle size deviation value being inspected to be greater than or equal to the insurance deviation indicates that at least 90% of the powder in the first powder meets the particle size requirement for separator preparation, and discharging the first powder to the equipment of the next process to produce the lithium battery separator will make the consistency of quality of the produced lithium battery separator better.

Generally, during the sieve plate mechanism performs sieving on the first powder, the first powder may easily abrade and damage the sieve plate mechanism to produce magnetic foreign matter. The magnetic foreign matter may enter the lithium battery separator and easily cause damage to the lithium battery separator and affect product quality.

Referring to FIG. 2d, in order to solve the above problem, in one of the embodiments, antecedent to S221e, discharging the target powder to the equipment of the next process, the following is included:
Step A, getting an electromagnetic bar;
Step B, wrapping a polypropylene shell outside the electromagnetic bar to obtain a demagnetization stick;
Step C, activating the demagnetization stick and inserting the demagnetization stick into the target powder to stir in order to perform a demagnetization operation on the target powder;
Step D, deactivating the demagnetization stick and performing a cleaning operation after removal of the demagnetization stick from the target powder.

In the instant embodiment, the electromagnetic bar is an electromagnet in a cylindrical form. Wrapping the polypropylene shell outside the electromagnetic bar allows the electromagnetic bar to be protected by the polypropylene shell to obtain the demagnetization stick. Activating the demagnetization stick means connecting an electrical power source to the electromagnetic bar, and at this time, the electromagnetic bar generates magnetism in the polypropylene shell. Inserting the demagnetization stick into the target powder to stir makes the magnetic foreign matter in the target powder contacting and sucked on the surface of the polypropylene shell of the demagnetization stick. The polypropylene shell can not only protect the electromagnetic bar, but also prevent the target powder from rubbing the polypropylene shell to generate new magnetic foreign matter. Afterwards, the demagnetization stick is removed from the target powder, and the demagnetization stick is deactivated, namely disconnecting the electrical power source from the electromagnetic bar, and at this time, the magnetic foreign matter sucked on the surface of the polypropylene shell of the demagnetization stick will fall off due to losing magnetic effect, making it easier to clean the demagnetization stick.

Generally, during the course of pulling the demagnetization stick out of the target powder, the magnetic foreign matter sucked on the demagnetization stick will fall back into the target powder due to contacting with the target powder, resulting in a decrease in the demagnetization effect.

In order to solve the above problem, in one of the embodiments, antecedent to Step C, activating the demagnetization stick and inserting the demagnetization stick into the target powder to stir in order to perform a demagnetization operation on the target powder, the following is further included:
Step C1, getting a wool net bag;
Step C2, wrapping the demagnetization stick in the wool net bag.

In the instant embodiment, by wrapping the wool net bag outside the demagnetization stick, the wool net bag can be inserted into the target powder along with the demagnetization stick, and the magnetic foreign matter in the target powder will get embedded in net openings of the wool net bag under the action of the magnetic force of the demagnetization stick. In this way, during the course of pulling the demagnetization stick out of the target powder, the magnetic foreign matter is bound by the wool of the wool net bag, and thus is not likely to slide off the demagnetization stick, thereby further improving the demagnetization effect.

In one embodiment, dispersing and mixing a second raw material and the second powder according to a dynamic blending ratio to obtain a mixed material in S240 comprises:
S241, transporting a first preset amount of the second raw material to the dispersion tank. In the instant embodiment, the first preset amount is obtained based on the performance of the sand mill assembly that is being currently used and industry experience. By transporting the first preset amount of the second raw material to the dispersion tank, the dispersion tank can first store a given amount of the second raw material, so as to facilitate subsequent dispersion blending with the second powder according to the dynamic blending ratio.

S242, transporting, in multiple times, a second preset amount of the second powder to the dispersion tank to disperse and blend the second raw material and the second powder, so as to obtain the mixed material, wherein the first preset amount is greater than the second preset amount. In the instant embodiment, the second preset amount is obtained based on the performance of the sand mill assembly that is being currently used and industry experience. Transporting the second preset amount of the second powder to the dispersion tank through delivery of multiple times makes the second powder fed in an intermittent manner into the dispersion tank to avoid excessive aggregation of the second powder, in order to make the second powder and the second raw material uniformly dispersed in and blended in the dispersion tank to allow the sand mill assembly to fully grind the mixed material. Also, since the first preset amount is greater than the second preset amount, the amount of the second raw material in the mixed material is greater than the amount of the second powder so as to ensure that the second raw material of the previous process is ground in a timely manner.

In one embodiment, antecedent to S250, transporting the mixed material to the sand mill assembly to perform grinding on the mixed material, the following is further included:
S251, calculating a difference between the first particle size parameter and the preset particle size parameter to obtain a current particle size difference. In the instant embodiment, by calculating the difference between the first particle size parameter and the preset particle size parameter, the deviation between the first particle size parameter and the preset particle size parameter can be obtained, indicating the difference between the particle size of the first powder and the particle size required for separator preparation.

S252, inspecting whether the current particle size difference is greater than a preset particle size difference. In the instant embodiment, the preset particle size difference is a specified difference between the first particle size parameter and the preset particle size parameter, which can be confirmed based on industry experience. By comparing the current particle size difference and the preset particle size difference, it is possible to reflect the degree to which the particle size of the first powder deviates from the particle size required for separator preparation.

S253, transmitting a power increase signal to the sand mill assembly, if the current particle size difference is greater than the preset particle size difference. **In** the instant embodiment, the current particle size difference being greater than the preset particle size difference indicates that the deviation of the particle size of the first powder from the particle size required for separator preparation is excessively large, namely indicating that the grinding intensity of the grinding assembly that is being used on the raw material is low. By transmitting the power increase signal to the sand mill assembly, the operation power of the sand mill assembly can be increased to enhance the grinding effect of the grinding assembly on the mixed material and reduce grinding times and time.

In one embodiment, subsequent to S252, inspecting whether the current particle size difference is greater than a preset particle size difference, the following is further included:
S252a, driving the sand mill assembly to operate by maintaining the current power if the current particle size difference is less than or equal to the preset particle size difference. In the instant embodiment, the current particle size difference being less than or equal to the preset particle size difference indicates that the deviation of the particle size of the first powder from the particle size required for separator preparation is small, namely indicating that the first powder can rapidly achieve the particle size required for separator preparation after being further ground by the grinding assembly, so that the sand mill assembly can be driven to operate by maintaining the current power to reduce the consumption of additional power.

In one of the embodiments, the preset particle size parameter is between 5µm and15µm. In the instant embodiment, the size of the preset particle size parameter is determined based on the quality of raw material, the type of lithium battery separator, and industry experience. The larger the preset particle size parameter, the smaller the particle size of the powder required for the lithium battery separator that is being produced, indicating that the requirement that the first particle size parameter needs to achieve is more stringent, namely indicating that the particle size of the first powder needs to be smaller to meet in order to meet the particle size requirement for separator preparation, and this will cause the raw material to be ground for a longer time. Setting the preset particle size parameter between 5µm and 15µm can reduce grinding hours and improve production efficiency while meeting the requirement for preparation of lithium battery separators.

As shown in FIG. 3, the disclosure also provides a powder preparation apparatus 10 that adopts a dispersion-blending based particle size-improved lithium battery ceramic separator powder preparation method according to any one of the above-described embodiments comprises a dispersion tank 100, a sand mill assembly 200, a powder inspection tank 300, a powder buffer tank 400. The sand mill assembly 200 is connected to the dispersion tank 100, and the sand mill assembly 200 is used to grind a first raw material or a mixed material. A feeding end of the powder inspection tank 300 is connected to a discharging end of the sand mill assembly 200 via pipeline 212. The powder inspection tank 300 is used to store the first powder for inspection. The powder inspection tank 300 is provided with a discharge port 304 and a return port 306, and the discharge port 304 is used to discharge the first powder out. A feeding end 402 of the powder buffer tank 400 is connected to the return port 306 of the powder inspection tank 300, and the powder buffer tank 400 is used to store the second powder temporarily. A discharging end 404 of the powder buffer tank 400 is connected to the dispersion tank 100 via the pump 410 and the pipelines 602, 604 and 606, and a second raw material and the second powder are dispersed and blended in the dispersion tank 100. The discharge port 304 and the return port 306 may be separately formed as shown in FIG. 4 or formed as an integral one as shown in FIG. 3. A three-way valve may be provided between a connection between the pipelines 602, 604 and discharging port 500 so that the first powder can flow from the pipeline 602 to the pipeline 604 or flow from the pipeline 602 to the discharging port 500.

It is appreciated that with the dispersion-blending based particle size-improved lithium battery ceramic separator powder preparation method of the disclosure being applied to the powder preparation apparatus 10, a first raw material is transported to the sand mill assembly 200, and the first raw material is ground by the sand mill assembly 200 to obtain a first powder. Since the discharging end of the sand mill assembly 200 is connected to the feeding end 302 of the powder inspection tank 300 via the pipeline 212, the first powder can enter the powder inspection tank 300, and a first particle size parameter can be obtained by inspecting the first powder in the powder inspection tank 300. If the first particle size parameter is greater than a preset particle size parameter, it indicates that the first powder in the powder inspection tank 300 does not meet the requirement for production, and at this time, since the return port 306 of the powder inspection tank 300 is connected to the feeding end 402 of the powder buffer tank 400 via the pipelines 602, 604, the first powder can enter the powder buffer tank 400 to form a second powder. As the powder buffer tank 400 is also connected to the dispersion tank 100 via the pipelines 602, 604 and 606 and 104, the second powder can be mixed with a second raw material, which enters the dispersion tank 100 via the pipeline 102, in the dispersion tank 100. Since the dispersion tank 100 is connected to the sand mill assembly 200, the mixed material in the dispersion tank 100 can be transported to the sand mill assembly 200, so that the second powder can enter the sand mill assembly 200 together with the second raw material for grinding. In this way, the raw material of the previous process can be ground timely, and the material obtained through grinding the raw material can enter the equipment of the next process, so as to reduce the impact of repeated grinding of powder on the rhythm and efficiency of the production line. Also, based on this method, raw materials of different batches and qualities can be ground through the same sand mill assembly 200, so that there is no need to replace or install new grinding equipment, and the investment in production costs can be reduced.

In one of the embodiments, the sand mill assembly 200 comprises at least two sand mills 210 connected to each other. The dispersion tank 100 is connected to each of the sand mills 210. The powder inspection tank 300 is connected to the dispersion tank 100 and each of the sand mills 210. It is appreciated that since the dispersion tank 100 is connected to each of sand mills 210, the raw material in the dispersion tank 100 can be ground by any one of the mills 210, and the production will not be interrupted due to failure or service of a specific one of the sand mills 210. Meanwhile, since the sand mills 210 are connected together in series, and the dispersion tank 100 is connected to the sand mills 210, the material discharged from the dispersion tank 100 can be ground by the mills 210 in sequence. The material (for example the first powder material) discharged from the powder inspection tank 300 can be ground by the mills 210 in sequence or any one of the mills 210 before step S210. Thus, an operator can flexibly adjust the route according to the quality of the raw materials, making the raw materials to pass a single one or multiple ones of the sand mills 210 in sequence. Further, since the powder inspection tank 300 is also connected to the dispersion tank 100, when all sand mills 210 fail or are under maintenance, the impact on production is reduced. **In** addition, the port 404 of the powder buffer tank 400 is connected to the discharge port 106 of the dispersion tank 100 via a pipeline 108 so that material discharged from 100 can be stored in the powder buffer tank 400 in some cases.

In one of the embodiments, the sand mill assembly comprises a first sand mill and a second sand mill connected to each other. The dispersion tank is connected to the first sand mill and the second sand mill. The powder inspection tank is connected to the dispersion tank, the first sand mill, and the second sand mill. It is appreciated that since the dispersion tank is connected to the first sand mill and the second sand mill, the raw material in the dispersion tank can be selectively supplied to the first sand mill and the second sand mill. The production will not be interrupted due to failure or service of any one of the first sand mill and the second sand mill. Meanwhile, since the powder inspection tank is connected to the dispersion tank, the first sand mill, and the second sand mill, the raw material can pass a single one or both of the two sand mills in sequence for grinding, or the raw material in the dispersion tank can directly enter the powder inspection tank, thereby reducing the impact on production due to failure or maintenance of the sand mills.

## Claims

1. A dispersion-blending based particle size-improved lithium battery ceramic separator powder preparation method, **characterized by** comprising:
transporting a first raw material to a sand mill assembly to obtain a first powder; and
performing a complex grinding inspection operation on the first powder;
wherein the complex grinding inspection operation comprises:
inspecting the first powder to obtain a first particle size parameter;
determining whether the first particle size parameter is greater than a preset particle size parameter;
transporting the first powder to a powder buffer tank to form a second powder if the first particle size parameter is greater than the preset particle size parameter;
dispersing and mixing a second raw material and the second powder according to a dynamic mixing ratio to obtain a mixed material; and
transporting the mixed material to the sand mill assembly to perform grinding on the mixed material;
wherein the dynamic blending ratio is obtained by the following steps:
acquiring a feeding rate of the second raw material;
acquiring a discharge rate of the second powder;
performing speed ratio processing on the feeding rate and the discharge rate to obtain a mixing flow rate ratio;
inspecting whether the mixing flow rate ratio is less than or equal to a preset mixing flow rate ratio; and
increasing the feeding rate of the second raw material and decreasing the discharge rate of the second powder when the mixing flow rate ratio is less than or equal to the preset mixing flow rate ratio.

2. The dispersion-blending based particle size-improved lithium battery ceramic separator powder preparation method according to claim 1, **characterized by** further comprising the following steps subsequent to transporting the mixed material to the sand mill assembly to perform grinding on the mixed material:
operating the sand mill assembly to grind the mixed material to obtain a third powder; and
returning back to a step of performing a complex grinding inspection operation on the first powder, wherein the third powder is used as the first powder.

3. The dispersion-blending based particle size-improved lithium battery ceramic separator powder preparation method according to claim 1, **characterized by** further comprising the following step subsequent to determining whether the first particle size parameter is greater than a preset particle size parameter:
discharging the first powder if the first particle size parameter is less than or equal to the preset particle size parameter.

4. The dispersion-blending based particle size-improved lithium battery ceramic separator powder preparation method according to claim 1, **characterized by** further comprising the following steps subsequent to transporting the first powder to a powder buffer tank to form a second powder:
obtaining a powder passage duration according to cumulative time of a one-way valve opening;
inspecting whether the powder passage duration is greater than or equal to a preset passage duration; and
increasing the feeding rate and the discharge rate simultaneously if the powder passage duration is greater than or equal to the preset passage duration.

5. The dispersion-blending based particle size-improved lithium battery ceramic separator powder preparation method according to claim 4, **characterized by** further comprising the following steps subsequent to inspecting whether the powder passage duration is greater than or equal to a preset passage duration:
obtaining opening-counting cumulative number of times according to a cumulative number of times the one-way valve opens if the powder passage duration is less than the preset passage duration;
inspecting whether the opening-counting cumulative number of times is greater than or equal to a preset cumulative number of times; and
balancing operation power of a material introduction diaphragm pump if the opening-counting cumulative number of times is greater than or equal to the preset cumulative number of times.

6. The dispersion-blending based particle size-improved lithium battery ceramic separator powder preparation method according to claim 1, **characterized in that** dispersing and mixing a second raw material and the second powder according to a dynamic blending ratio to obtain a mixed material comprises:
transporting a first preset amount of the second raw material to the dispersion tank; and
transporting, in multiple times, a second preset amount of the second powder to the dispersion tank to disperse and mix the second raw material and the second powder, so as to obtain the mixed material, wherein the first preset amount is greater than the second preset amount.

7. The dispersion-blending based particle size-improved lithium battery ceramic separator powder preparation method according to claim 1, **characterized by** further comprising the following steps antecedent to transporting the mixed material to the sand mill assembly to perform grinding on the mixed material:
calculating a difference between the first particle size parameter and a preset particle size parameter to obtain a current particle size difference;
inspecting whether the current particle size difference is greater than a preset particle size difference; and
transmitting a power increase signal to the sand mill assembly if the current particle size difference is greater than the preset particle size difference.

8. The dispersion-blending based particle size-improved lithium battery ceramic separator powder preparation method according to claim 7, **characterized by** further comprising the following step subsequent to inspecting whether the current particle size difference is greater than a preset particle size difference:
driving the sand mill assembly to operate by maintaining current power if the current particle size difference is less than or equal to the preset particle size difference.

9. A powder preparation apparatus adopting the dispersion-blending based particle size-improved lithium battery ceramic separator powder preparation method according to any one of claims 1-8, **characterized by** comprising:
a dispersion tank (100);
the sand mill assembly (200), wherein the sand mill assembly is connected to the dispersion tank (100), the sand mill assembly being used to grind the first raw material or the mixed material;
a powder inspection tank (300), wherein a feeding end (302) of the powder inspection tank is connected to a discharging end of the sand mill assembly; the powder inspection tank is used to store the first powder for inspection; and the powder inspection tank is provided with a discharge port (304) and a return port (306), and the discharge port (304) is used to discharge the first powder out;
the powder buffer tank (400), wherein a feeding end (402) of the powder buffer tank is connected to the return port (306), and the powder buffer tank is configured to store the second powder; and a discharging end (404) of the powder buffer tank (400) is connected to the dispersion tank, and the second raw material and the second powder are dispersed and mixed in the dispersion tank.

10. The powder preparation apparatus according to claim 9, **characterized in that** the sand mill assembly comprises at least two sand mills (210) connected to each other, and the dispersion tank (100) is connected to each of the sand mills; and the powder inspection tank (300) is connected to the dispersion tank (100) and each of the sand mills (210).
